Europäisches Patentamt

European Patent Office

Office européen des brevets

(11) Publication number: **0 459 355 A1**

## EUROPEAN PATENT APPLICATION

(21) Application number: 91108590.0

(22) Date of filing: 27.05.91

(51) Int. Cl.⁵: **H02K 1/27**, H02K 15/03

(30) Priority: 01.06.90 JP 141372/90
15.06.90 JP 155203/90
21.09.90 JP 252310/90

(43) Date of publication of application:
**04.12.91 Bulletin 91/49**

(84) Designated Contracting States:
**DE GB**

(71) Applicant: **HITACHI, LTD.**
**6, Kanda Surugadai 4-chome**
**Chiyoda-ku, Tokyo 101(JP)**

(72) Inventor: **Toyoshima, Hisanori**
**1-3, Kokubucho-2-chome**
**Hitachi-shi(JP)**
Inventor: **Joraku, Fumio**
**2-9, Kokubucho-2-chome**
**Hitachi-shi(JP)**
Inventor: **Ishii, Yoshitaro**
**3-7, Suwacho-6-chome**
**Hitachi-shi(JP)**
Inventor: **Kawamata, Mitsuhisa**

**1-3, Kokubucho-2-chome**
**Hitachi-shi(JP)**
Inventor: **Miyashita, Kunio**
**45-15, Nishinarusawacho-4-chome**
**Hitachi-shi(JP)**
Inventor: **Koharagi, Haruo**
**1180-107, Ishihongo, Juomachi**
**Taga-gun, Ibaraki-ken(JP)**
Inventor: **Tahara, Kazuo**
**32-13, Nishinarusawacho-2-chome**
**Hitachi-shi(JP)**
Inventor: **Abe, Takeshi**
**25-9, Tajiricho-1-chome**
**Hitachi-shi(JP)**
Inventor: **Miyata, Teruyuki**
**1-3, Kokubucho-2-chome**
**Hitachi-shi(JP)**

(74) Representative: **Patentanwälte Beetz sen. -**
**Beetz jun. Timpe - Siegfried -**
**Schmitt-Fumian**
**Steinsdorfstrasse 10**
**W-8000 München 22(DE)**

(54) **Permanent magnet type rotor.**

(57) A permanent magnet type rotor is disclosed which comprises a cylindrical core member (4), a plurality of arcuate permanent magnet segments (3) disposed around an outer periphery of the core member (4) and a non-magnetic sleeve (2) disposed around outer peripheries of the arcuate permanent magnet segments. The magnet segments (3) having the same pole are brought into contact with each other. Circumferential direction pressing members (14) are interposed between the magnet segments having the different poles. It is thus possible to enhance the arrangement precision of the magnet segments (3) and a balance precision during the rotation to thereby stabilize the magnetic distribution characteristics.

**FIG. I**

## BACKGROUND OF THE INVENTION

### Field of the Invention

The present invention relates to a permanent magnet type rotor, and more particularly to a rotor in which an arrangement precision of arcuate segments of the permanent magnets is enhanced.

### Description of the Prior Art

Japanese Utility Model Unexamined Publication No. 64-25874 discloses a conventional arrangement in which split permanent magnets are integrally secured to a yoke and a surface protective member by using a die-casting material such as aluminum and zinc, thereby enhancing the positional precision and assembling precision of the permanent magnet type rotor. However, there has been no consideration in the mutual arrangement precision of the arcuate segments of the permanent magnets constituting magnetic poles, in the prevention of change in magnetic field distribution characteristics or in the correction of balance of the permanent magnet type rotor.

In particular, recently, a rotor has been frequently used for a high speed mode and also for a brushless motor with an electronic circuit such as an inverter motor. Under these circumstances, it is technically advantageous to use a two-pole arrangement for the number of poles of the permanent magnet rotor, which arrangement has a smaller number of poles than that of a multi-pole arrangement, because the current switching frequency for the driving electronic circuit may be low and the two-pole arrangement is suitable for the high speed mode.

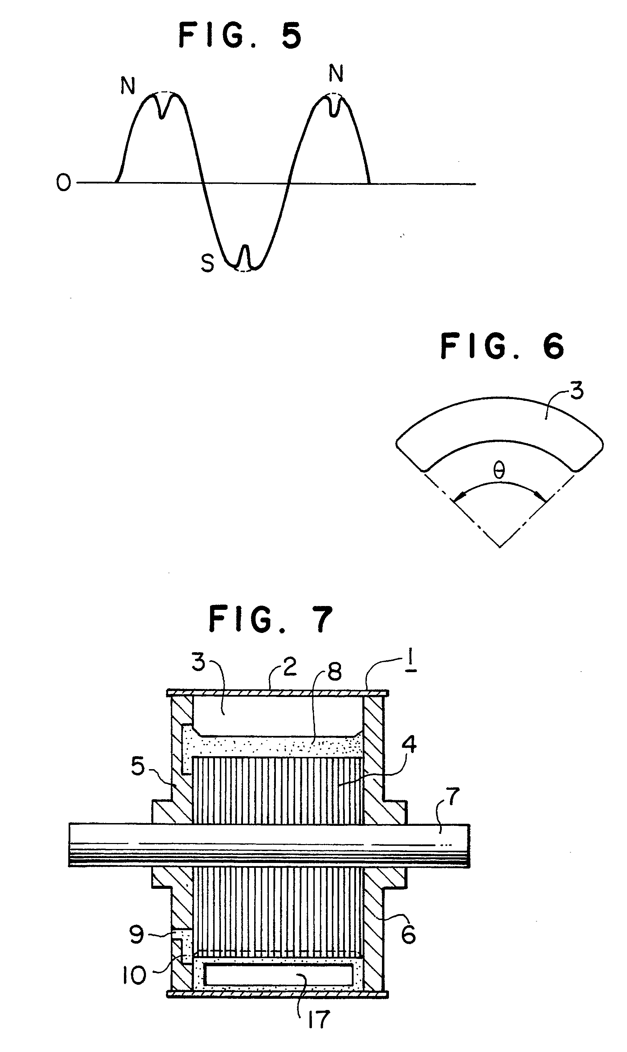

On the other hand, in view of a manufacture technique of permanent magnets, as shown in Fig. 6, a spreading angle $\theta$ of an arcuate segment of the permanent magnet falls within an allowable range of 140 to 160 degrees for a desired magnetic characteristic and a sufficient dimensional precision. It would be difficult to constitute the two-pole arrangement only with the two magnet segments of $\theta \fallingdotseq 180°$.

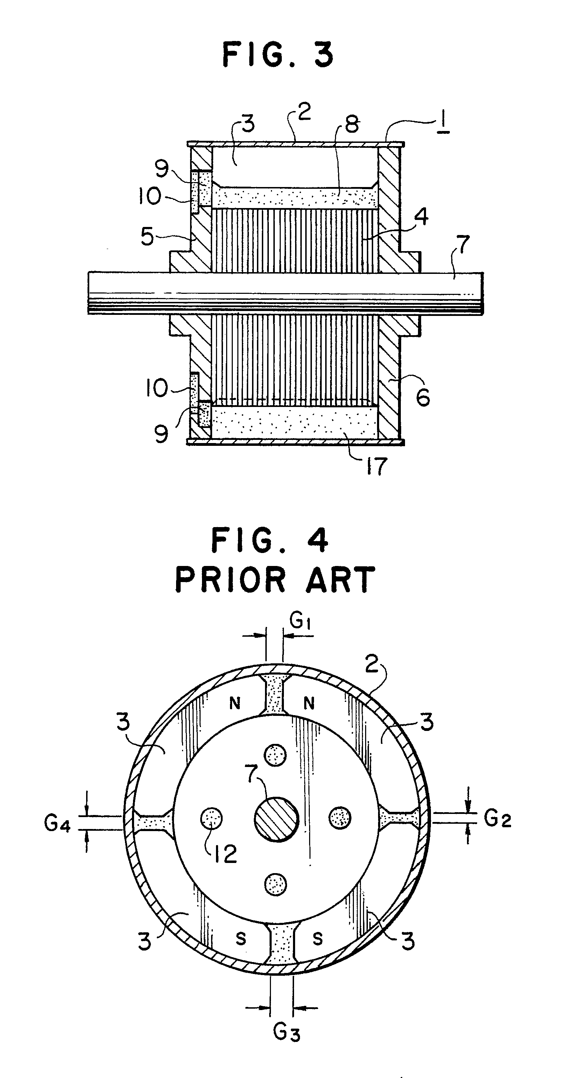

Thus, as a matter of fact, the four permanent magnet segments each having $\theta \fallingdotseq 90$ are used with two poles as shown in Fig. 4. In this case, it is advantageous to absorb twists of the permanent magnets and errors in dimensional precision in the assembled arrangement. On the other hand, in the case where a gap is produced between the magnet segments due to the dimensional errors, the magnet segments would be displaced in the circumferential direction. As a result, as shown in Fig. 4, the gaps G1, G2, G3 and G4 are different in dimension. In particular, it is preferable to minimize the gaps G1 and G3 which are located in the magnetically central polar portion upon the magnetic application. However, if these gaps would be increased, in the magnetic distribution characteristics after the magnetic application as shown in Fig. 5, a trough would be generated in the magnetic pole central portion, resulting in disablement of obtaining a satisfactory characteristics of the rotation.

In addition, if the respective magnetic segments could not be arranged in a symmetric manner with respect to the rotor shaft, there would be an unbalance in rotation, which would be disadvantageous in vibration and suppression of noises.

Furthermore, in a recent frequent use of the rotors for the high speed mode, there is a problem that the residual unbalance would casue the vibration. In such a prior art arrangement, due to the unbalance caused by the non-uniformity of assembling and dimensional precision, there is a fear that the vibration would be increased.

## SUMMARY OF THE INVENTION

In order to overcome the foregoing difficulties, an object of the present invention is to provide a permanent magnet type rotor which may enhance the balance precision during the rotation and may stabilize the magnetic distribution characteristics.

In order to attain the above-described and other objects, according to the present invention, there is provided a permanent magnet type rotor comprising a cylindrical core member, a plurality of arcuate segment-shaped permanent magnets arranged around an outer periphery of the core member, and a non-magnetic cylindrical sleeve disposed around outer peripheries of the arcuate segment-shaped permanent magnets, wherein the same poles of the plurality of arcuate segment-shaped permanent magnets are brought into contact with each other, and circumferential direction pressing members are interposed between the different poles of the plurality of arcuate segment-shaped permanent magnets.

The circumferential direction pressing member may be a die-casting material interposed between the different poles.

In this case, the permanent magnet segments are pressed in the circumferential direction by the die-casting material interposed between the permanent magnet segments and are unitarily secured so that the gaps between the permanent magnet segments which gaps are to be located in the central portion of the poles are at minimum. Thus, there is no fear that the magnetic distribution would be reduced in the magnetic pole central portion.

The circumferential direction pressing member may be an elastic member. In this case, a convex or concave portion for determining the reference position for the permanent magnet segment is formed in the core member to attain the axially symmetrical arrangement.

In this case, since the permanent magnet segments are pressed in the circumferential direction by the elastic members interposed in the gaps of the permanent magnet segments, and are held and unitarily secured so that the gaps between the permanent magnet segments, which gaps are to be located in the central portion of the magnetic poles, are at minimum, there would be no fear that the magnetic distribution reduction would occur at the magnetic pole central portion. The reference position for the permanent magnet segments may be stably set by the convex or concave portion formed in the core member for positioning, and the permanent magnet segments are arranged in a symmetrical manner with respect to the rotary shaft to thereby enhance the rotational balance.

Furthermore, in order to attain the above-described object, it is possible to form a balance correcting portion on an end face or an outer circumferential surface of the permanent magnet type rotor by the die-casting material to be interposed between the gaps.

Upon the balance correction, a necessary amount of the die-casting material in the balance correcting portion in the unbalance direction generated due to the dimensional error and assembling errors is removed for correction. Thus, it is possible to correct the unbalance generated due to the assembling errors.

BRIEF DESCRIPTION OF THE DRAWINGS

In the accompanying drawings:
Fig. 1 is a cross-sectional view showing a primary part of a permanent magnet type rotor in accordance with a first embodiment of the invention;
Fig. 2 is a perspective view showing the primary part shown in Fig. 1;
Fig. 3 is a cross-sectional view taken along the line III-III of Fig. 1;
Fig. 4 is a cross-sectional view showing a primary part according to the conventional rotor;
Fig. 5 is a magnetic distribution characteristic graph in the permanent magnet type rotor;
Fig. 6 is a side elevational view showing the permanent magnet segment;
Fig. 7 is a cross-sectional view showing a primary part of a permanent magnet type rotor in accordance with another embodiment of the invention;
Fig. 8 is a sectional view as viewed in the axial direction of Fig. 7;
Fig. 9 is a perspective view showing the assembled condition of the permanent magnet type rotor shown in Fig. 7;
Figs. 10A to 10C are perspective views showing another elastic member of Fig. 7;
Fig. 11 is a sectional view of the rotor according to another embodiment as viewed in the axial direction similar to Fig. 8;
Fig. 12 is a perspective view showing an elastic member shown in Fig. 11;
Fig. 13 is a sectional view of the rotor according to still another embodiment as viewed in the radial direction similar to Fig. 8;
Fig. 14 is a perspective view showing an elastic member shown in Fig. 13;
Figs. 15A to 15C are perspective views showing an elastic member in accordance with another embodiment;
Fig. 16 is a sectional view showing a primary part of a permanent magnet type rotor in accordance with still another embodiment of the invention;
Fig. 17 is a perspective view showing an end portion of the rotor shown in Fig. 16; and
Fig. 18 is a sectional view showing a primary part in accordance with still another embodiment of the invention.

DETAILED DESCRIPTION OF THE INVENTION

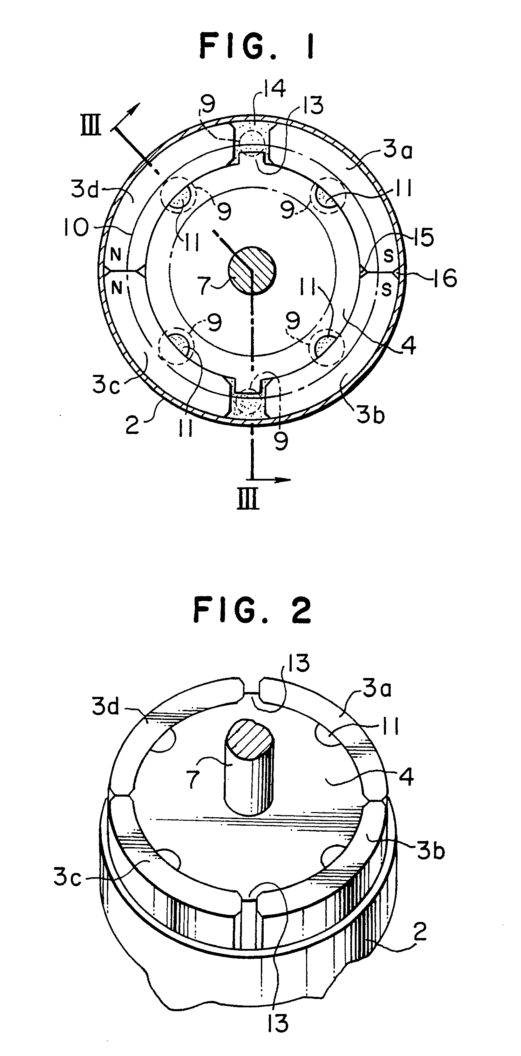

One embodiment of the invention will now be described with reference to the accompanying drawings. Referring now to Figs. 1 to 3, there are shown a permanent magnetic rotor 1, a non-magnetic cylindrical sleeve 2, a plurality of arcuate segment-shaped permanent magnets 3, a core member 4 made of laminated steel plates, end plates 5 and 6 made of non-magnetic material and a rotary shaft 7.

Reference numeral 8 denotes a die-casting material which is filled in a space of the rotary shaft 1 through a port 9, provided on the end plate 5, an annular groove 10, a plurality of grooves 11 formed in the yoke 4 confronted with the annular groove 10, and gaps between the magnet segments 3.

Fig. 3 is a longitudinal sectional view showing one embodiment of the invention. Fig. 1 is a cross-sectional view thereof as viewed in the radial direction, and Fig. 2 is a perspective view during the assembling operation, showing the insertion condition of the arcuate segment-shaped permanent magnets 3, the core member 4 and the like into the non-magnetic cylindrical sleeve 2. Fig. 4 is a longitudinal sectional view showing a conventional example. In these drawings, the same reference numerals are used to indicate the like components and members. In Fig. 4, reference numeral 12 denotes holes which serve as die-casting material poring ports. Figs. 4 through 6 have been explained in conjunction with the prior art.

In the cross-sectional view shown in Fig. 1, reference numeral 13 denotes convex portions formed in the core member 4 and positioned between the magnetic poles N and S applied to the magnet segments 3. In this embodiment, two poles are formed with the four magnet segments 3, and the two convex portions 13 are formed on the core member 4.

The die-casting material is filled from the annular groove 10, shown by the one-dot and dash line in Fig. 1, through six casting material ports 9 (shown by the dotted lines in Fig. 1) and a plurality of grooves 11 of the core member 4 to gaps 14 between the magnet segments 3 and spaces 15 and 16 defined by chamfered finished surfaces of the magnet segments 3. At this time, the magnet segment 3 is depressed in the circumferential direction by the die-casting material interposed in the gaps 14 and are brought into contact with each other at the position between the magnet segments 3a and 3b and between the magnet segments 3c and 3d so that the segments 3 are secured to each other without any gap.

Accordingly, like the magnetic distribution characteristics shown by the dotted lines in Fig. 5, it is possible to stably avoid the magnetic reduction at the contact portions of the magnet segments 3a and 3b, and 3c and 3d which are located in the central portion of the applied poles. Also, the gaps between the magnet segments 3a and 3d and between the magnet segments 3b and 3c which serve as the magnetic pole gaps for N and S poles are positively formed, but these gaps are located at the switching portions where the magnetic flux distribution becomes zero. Thus, there is no adverse affect against the magnetic characteristics.

The permanent magnet segments 3 are pressed by the convex portion 13 of the core member 4 and the filled die-casting material and are arranged in a symmetrical manner with respect to the rotary shaft 7. Also, the die-casting material is filled into the groove 11, so that the permanent magnet segments 3 are held and depressed against the inner circumferential surface of the non-magnetic cylindrical sleeve 2 located around the outer peripheries of the segments 3.

Namely, the permanent magnet segments 3 are located stably both in the circumferential direction and the radial direction in a symmetrical manner. Accordingly, it is possible to prevent a generation of the rotational unbalance due to the change or non-uniformity of the arrangement position of the permanent magnet segments 3, and it is possible to suppress the rotational vibration and noises of the permanent magnet type rotor 1.

In this embodiment, the positioning convex portions 13 are formed unitarily with the core member 4 but its arrangement is not limited thereto or thereby. It is possible to form a discrete piece from the core member 4 and to dispose the piece on the non-magnetic cylindrical sleeve side.

According to the foregoing embodiment of the invention, since the permanent magnet segments 3 are depressed in the circumferential direction by the die-casting material interposed in the gaps between the permanent magnet segments 3 and are die-cast and fixedly secured so that the gaps between the permanent magnet segments which gaps are located in the central portion of the magnetic poles are at minimum, there is no fear that the magnetic distribution would be reduced at the central portion of the magnetic poles.

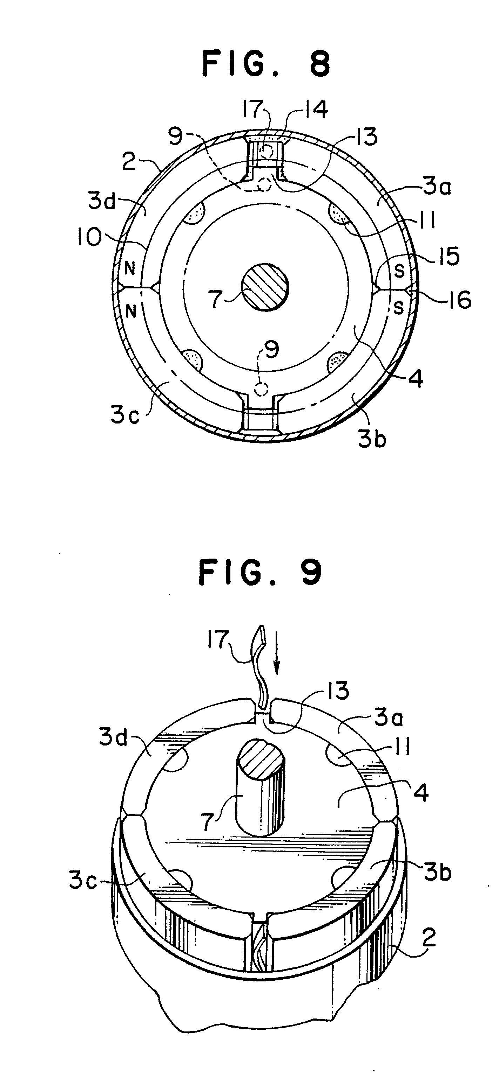

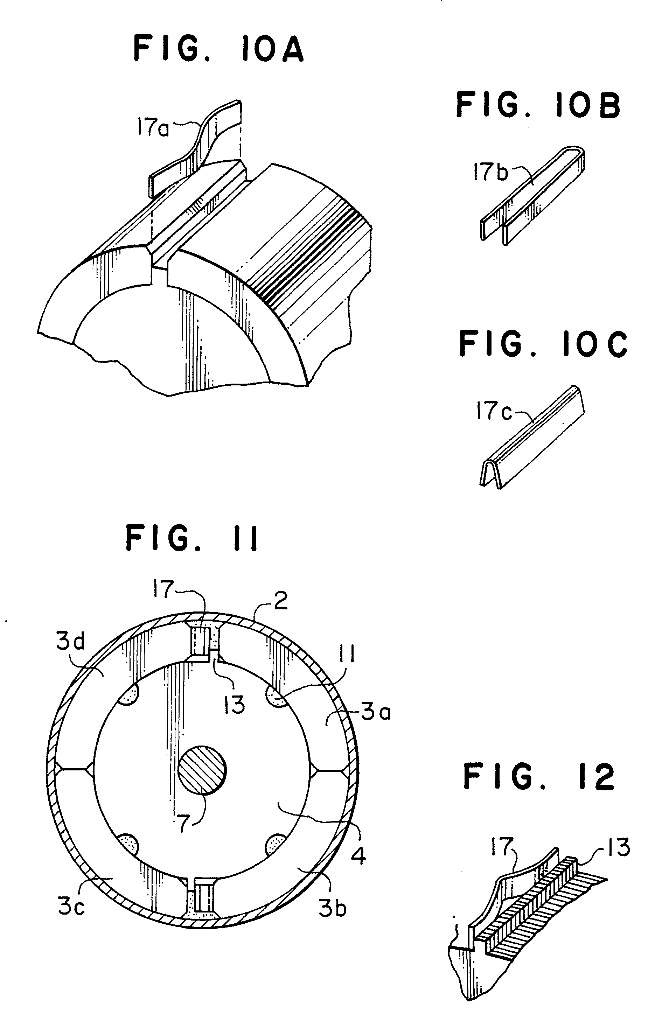

Another embodiment of the invention will now be described with reference to the drawings in which the same reference numerals are used to denote the like members and components. Fig. 7 is a longitudinal sectional view showing the other embodiment of the invention. Fig. 8 is a cross-sectional view showing the embodiment shown in Fig. 7. Fig. 9 is a perspective view showing the condition of assembling work of insertion of the arcuate segment-shaped permanent magnets 3, the yoke 4 and the like into the non-magnetic cylindrical sleeve 2. Figs. 10A to 15C are views showing another example in conjunction of this embodiment.

In the cross-sectional view shown in Fig. 8, reference numeral 13 denotes convex portions formed in the yoke 4 and located at spaces between the magnetic poles N and S after the magnetic application of the magnet segments 3. In this embodiment, the two poles are formed with the four magnet segments 3, and two convex portions 13 are formed in the yoke 4. The die-casting material is filled through the two casting material ports 9 represented by the dotted lines and a plurality of grooves 11 of the yoke 4 into the respective parts and are filled also to the gaps 14 between the convex portions 13 and the magnet segments 3 and spaces 15 and 16 defined by the chamfered finished surfaces of the magnet segments 3.

At this time, an elastic member 17 is inserted into the space defined by the convex portion 13 in a pre-step as shown in Fig. 9, the magnet segments 3 are pressed in the circumferential direction, and the segments 3 are held so that any gaps will not be formed between the segments 3a and 3b, and 3c and 3d and the die-casting material will not enter into these gaps as shown in fig. 8. Accordingly, it is possible to stably avoid the magnetic distribution reduction at the contact portions between the segments 3a and 3b and the segments 3c and 3d which portions are located in the central portion of the applied magnetic poles as shown by the dotted lines in the magnetic distribution characteristics in Fig. 5. The gaps between the magnetic segments 3a and 3d, and 3b and 3c which gaps serves gaps for N and S poles are positively formed. However, these gaps are formed at the switching portions where the magnetic flux distribution become zero. Thus, this would not adversely affect the magnetic characteristics.

Figs. 10A to 10C are perspective views an example of the elastic member 17. It is preferable to use a bronze phosphate leaf spring or a nonmagnetic spring as the elastic member. It is however possible to use a spring steel plate which is a magnetic member.

Fig. 11 is a cross-sectional view showing another embodiment of the invention, in which the elastic member 17 is interposed between the magnet segment 3 and the convex portion 13. The magnet segments 3a and 3c are pressed and held in the circumferential direction so that the end faces of the segments 3a and 3c are brought into contact with the convex portions 13a and 13b. Fig. 12 is a perspective view showing the elastic member 17 and the convex portion 13. From this, it will be understood that the magnetic segments 3 may locate the end face of the convex portion 13 at the reference position with high precision.

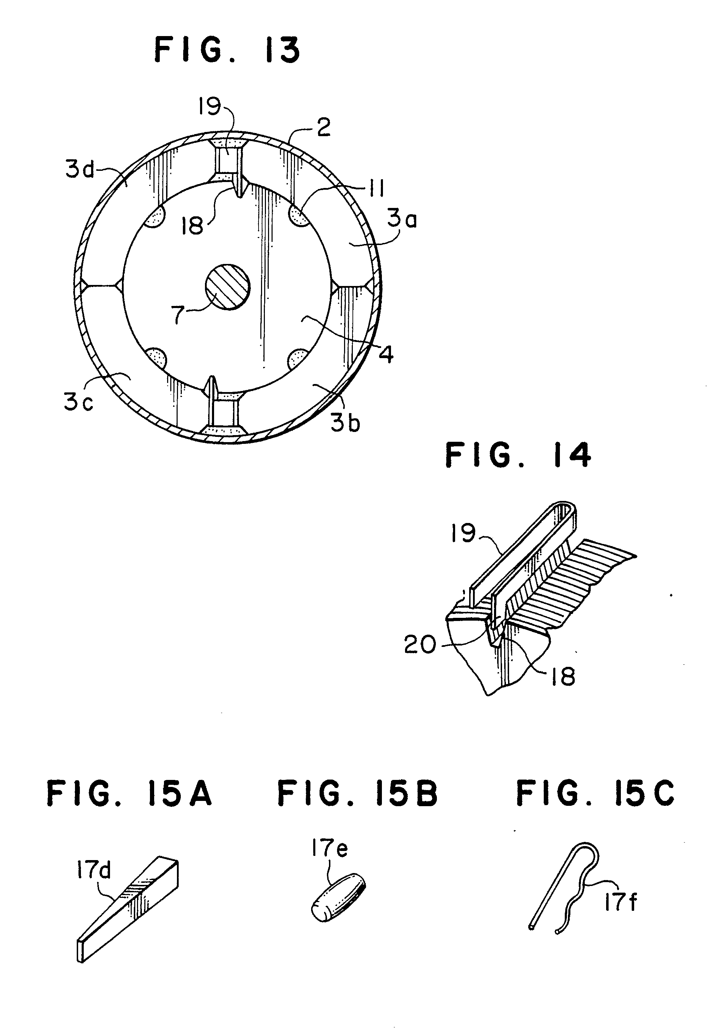

Fig. 13 shows still another embodiment in which a concave portion 18 is formed in the yoke 4 instead of the convex portion 13 for a reference position. Fig. 14 is a perspective view showing the elastic member 19 and the convex portion 18 with a tongue 20 being engaged with the convex portion 18.

Figs. 15A to 15C show other examples of elastic members 17d, 17e and 17f. The elastic member is not limited to a leaf spring if the member has the elasticity.

According to these embodiments, since the permanent magnet segments are pressed in the circumferential direction by the elastic members interposed between the segments, which members serve as circumferential direction pressing members, and the segments are fixedly secured under the condition that the gaps between the permanent magnet segments, which gaps are located in the central portion of the magnetic poles are at minimum, there is no reduction in magnetic distribution at the central portion of the magnetic poles.

It is possible to stably set the reference position for the magnetic segments by the convex or concave portions formed in the core member. The segments are disposed in a symmetrical manner with respect to the rotary shaft to thereby enhance the rotational balance precision.

In the foregoing embodiments, the four magnetic segments are used for the sake of explanation, but eight magnetic segments may be used in the same manner.

Yet another embodiment will be described with reference to the drawings.

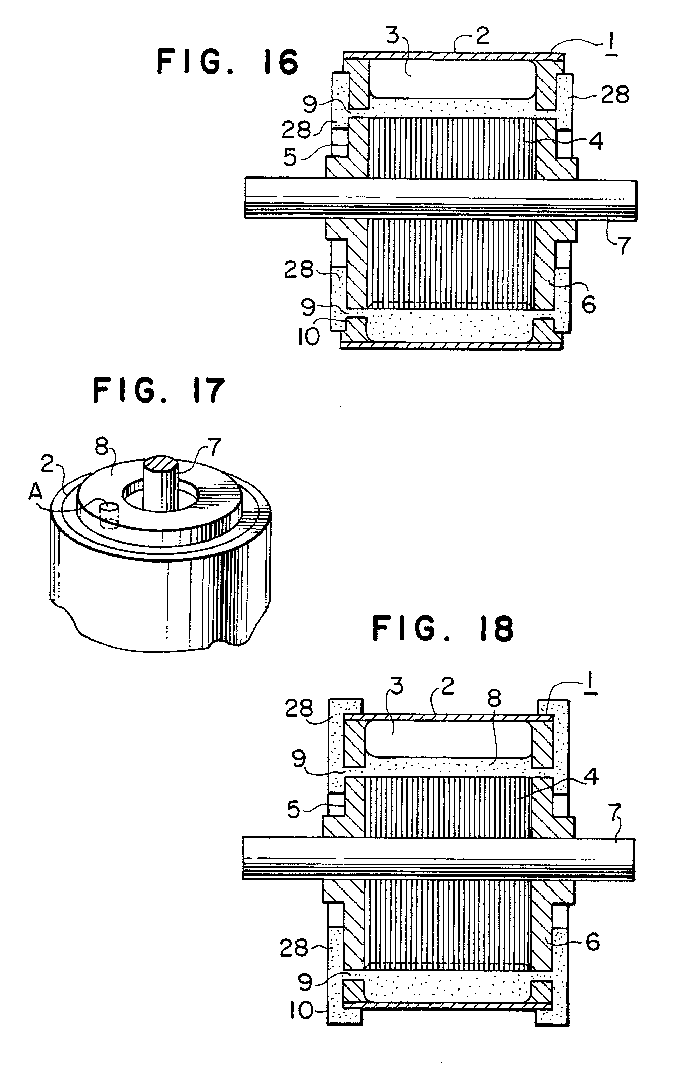

A basic structure of a permanent magnet type rotor shown in Fig. 16 is substantially the same as that of the embodiment shown in Figs. 3 and 7 except that balance correcting portions 28 are formed in a molded die-casting at the end faces. The cross-section of the rotor shown in fig. 16 is substantially the same as that of Fig. 1. However, the annular grooves 10 serves as branch flow paths to the plurality of die-casting material ports 9. Thus, it is possible to introduce the die-casting material uniformly.

Furthermore, the die-casting material in the form of rings residing in the annular grooves 10 forms the above-described balance correcting portions 28. The thickness of the correcting portions 28 may be suitably selected as a convex toward the radially inward direction as shown in Fig. 16 by the form of the die-casting molding dies. Thus, the balance correcting portion 28 are in the form of engagements with the annular grooves 10 and are in communication with the interior of the permanent magnet rotor 1 through the die-casting material ports 9 and fixed firmly against the centrifugal force and the axial force. At this time, since the magnet segments 3 are pressed in the circumferential direction as shown in Fig. 1 by the flow pressure of the die-casting material to be introduced between the gaps 14a and 14b so that the magnet segments 3 are pressed in a direction where the segments are brought into contact with each other between the gaps of the segments 3a and 3b, and 3c and 3d, the magnet segments 3 are fixed without any gaps. As a result, there is no fear that the gaps would be formed due to the introduction of the die-casting material.

However, there would be an imbalance due to a non-uniformity of the dimensional precision of the magnet segments 3, a twist thereof, and an assembling error such as a displacement of the magnet segments 3 or a non-uniformity of the gaps 14.

In a perspective view shown in Fig. 17, the balance correcting portion 28 formed of a die-casting material is in the form of a ring.

The imbalance generated due to the errors of the dimensional precision and the assembling precision of the magnet segments 3 may be compensated for by removing a part A from the balance correcting portion 28.

The part A is located in the same direction as that of the imbalance generated and corresponds to the imbalance amount. Since the balance correcting portion is in the form of a ring, it is possible to correct the imbalance even if the imbalance is generated anywhere. Furthermore, it is possible to increase the correction amount by increasing the thickness and the diameter of the correcting portion. It is thus possible to correct the precision even if the other components have somewhat worse precision. In addition, if the non-magnetic material is used as the die-casting material, there is no problem in magnetic characteristics. It is thus possible to increase the correction amount only in consideration of the mechanical strength.

Fig. 18 is a longitudinal sectional view showing yet another embodiment of the invention, similar to that shown in Fig. 16.

Balance correcting portions 28 are formed outside the outer diameter of the permanent magnet type rotor 1, to thereby further increase the correcting amount. Also, in case of the correction, the correction is effected by the removal of the balance correcting portions 28. However, it is possible to obtain the same effect by either of the foregoing examples in conformity with the working property of the balance correcting means to be used.

In general, the aluminum or zinc used as the die-casting material has a good cutting property. In the case where the balance correcting portions 28 formed of the die-casting material are desired to be cut for the balance correction, it is possible to enhance the working property of the correcting portions due to the good cutting property.

As described above, according to the invention, by cutting the balance correcting portions 28 die-cast at the end face portions, it is possible to correct the imbalance generated due to the non-uniformity of the dimensional precision and the assembling precision of the parts, to thereby prevent the increment of the vibration.

It is possible to correct any imbalance at any position in the radial direction by the balance correcting portions in the form of rings. Furthermore, it is possible to enhance the balance precision by the two surface correction.

With respect to the die-casing material, it is possible to enhance the working property of the balance correction with a material having good cutting characteristics, such as aluminium or zinc in general. Since these materials are non-magnetic materials, it is possible to increase or decrease the balance correction amount without adversely affecting the magnetic characteristics of the permanent magnet type rotor 1.

## Claims

1. A permanent magnet type rotor comprising:
   a cylindircal core member (4);
   a plurality of arcuate permanent magnet segments (3) disposed around an outer circumferential periphery of said core member (4); and
   a non-magnetic sleeve (2) disposed around outer peripheries of the plurality of permanent magnet segments (3);
   said arcuate permanent magnet segments (3) which have the same pole being in contact with each other; and
   circumferential direction pressing members (14) interposed between the arcuate permanent magnet segments (3) having the different poles.

2. The rotor according to claim 1, wherein said plurality of arcuate permanent magnet segments (3) form a single magnetic pole.

3. The rotor according to claim 1, wherein said circumferential direction pressing members (14) are made of a die-casting material.

4. The rotor according to claim 1, wherein convex portions (13) disposed between the different poles of said plurality of arcuate permanent magnet segments (3) are formed integrally with said core member (4).

5. The rotor according to claim 1, wherein said circumferential direction pressing members (14) comprise elastic members (17).

6. The rotor according to claim 5, wherein said elastic members (17) are interposed in every space between the arcuate permanent magnet segments (3) having the different poles.

7. The rotor according to claim 6, wherein a plurality of convex or concave portions (11) facing the spaces between the arcuate permanent magnet segments (3) forming the different poles are formed in said core member (4).

8. The rotor according to claim 7, wherein said convex or concave portions (11) of said core member (4) are formed for positioning said permanent magnet segments (3).

9. The rotor according to claim 7, wherein tongue portions (13) projecting inwardly toward the elastic members interposed in the spaces between said arcuate permanent magnet segments (3) are engaged with said concave portions of said core member.

10. A permanent magnet type rotor comprising:
    a cylindrical core member (4);
    a plurality of arcuate permanent magnet segments (3) disposed around an outer circumferential periphery of said core member (4);
    a non-magnetic sleeve (2) disposed around outer peripheries of said arcuate permanent magnet segments (3);

end plates (5, 6) provided at end faces of said sleeve (2); and

positioning members (13) disposed between the arcuate permanent magnet segments (3) having different poles for retaining spaces between the arcuate permanent magnet segments (3) having different poles;

the arcuate permanent magnet segments (3) having the same pole being in contact with each other;

wherein a plurality of molten material pouring ports (9) are formed in said end plates (5, 6), and a plurality of grooves (11) each extending in the axial direction are formed in said core member, said pouring ports (9) facing said grooves (11) of said core member and/or the spaces between the arcuate permanent magnet segments (3) having the different poles.

11. The rotor according to claim 10, wherein said positioning members (13) comprise convex portions formed on said outer periphery of said core member.

12. The rotor according to claim 10, wherein said grooves (11) of said core member (4) have a semicircular shape in cross section and are equidistantly formed.

13. The rotor according to claim 10, said permanent magnet segments (3) are composed of two permanent magnet segments to be an N-pole and two permanent magnet segments to be an S-pole, said permanents magnet segments being disposed around the outer periphery of said core member (4) in the order of N-, N-, S- and S-poles.

14. The rotor according to claim 10, wherein said permanent magnet segments (3) are composed of four permanent magnet segments to be an N-pole and four permanent magnet segments to be an S-pole, said permanent magnet segments being disposed around the outer pheriphery of said core member (4) so that the same pole of N- and S-poles is continued.

15. A permanent magnet type rotor comprising:
a cylindrical core member (4);
a plurality of arcuate permanent magnet segments (3) disposed around an outer circumferential periphery of said core member (4);
a non-magnetic sleeve (2) disposed around outer peripheries of said arcuate permanent magnet segments;(3);

end plates (5, 6) provided at end faces of said sleeve (2); and

said arcuate permanent magnet segments (3) being composed of two permanent magnet segments to be an N-pole and two permanent magnet segments to be an S-pole, said permanent magnet segments being arranged around said outer circumferential periphery of said core member (4) in the order of N-, N-, S- and S-poles, positioning convex portions (13) formed on the outer circumferential periphery of said core member (14) being located between the N-pole and S-pole of said permanent magnet segments (3) to thereby retain spaces therebetween, a die-casting material being filled through molten material pouring ports (9) formed in said end plates (5, 6) into said spaces to thereby contact the permanent magnet segments (3) having the same poles of the N-pole and S-pole with each other.

16. The rotor according to claim 15, wherein four grooves (11) extending in the axial direction are formed in the outer periphery of said core member (4), and the molten material pouring ports (9) are formed to face the grooves (11) of said core member (4).

17. The rotor according to claim 16, wherein said grooves (11) formed in the outer periphery of said core member (4) have a semicircular shape in cross section.

18. The rotor according to claim 15, wherein an annular groove is formed in each of said end plates and said molten material pouring ports are in communication with the annular grooves.

19. A permanent magnet type rotor comprising:
a cylindrical core member;(4);
a plurality of arcuate permanent magnet segments (3) disposed around an outer circumferential periphery of said core member (4);
a non-magnetic sleeve (2) disposed around outer peripheries of said plurality of permanent magnet segments; (3);
end plates (5, 6) provided at end faces of said sleeve (2); and
an annular groove and a plurality of molten material pouring ports (9) in fluid communication with said annular groove being formed in said end plates (5, 6), and a die-casting material being filled through said pouring ports (9) for integral structure;
wherein a balance correcting portion (28) is formed on said end face and/or the outer periphery by said die-casting material.

20. The rotor according to claim 19, wherein said balance correcting portion (28) is formed on each end face of said rotor.

21. The rotor according to claim 19, wherein said balance correcting portion (28) is in the form of a ring.

EP 0 459 355 A1

# FIG. 1

# FIG. 2

# FIG. 3

# FIG. 4
# PRIOR ART

# FIG. 5

# FIG. 6

# FIG. 7

# FIG. 8

# FIG. 9

# FIG. IOA

# FIG. IOB

# FIG. IOC

# FIG. II

# FIG. I2

# FIG. 13

# FIG. 14

# FIG. 15A

# FIG. 15B

# FIG. 15C

# FIG. 16

# FIG. 17

# FIG. 18

European
Patent Office

EUROPEAN SEARCH
REPORT

Application Number

EP 91 10 8590

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y,A | US-A-4 247 785  (J.W.APGAR)<br>* column 2, lines 19 - 26; figure 3 *<br>– – – | 1,2,4,10,<br>11,14,15 | H 02 K 1/27<br>H 02 K 15/03 |
| Y | DE-U-8 900 963  (FRANKL & KIRCHNER GMBH & CO. KG)<br>* page 4, lines 10 - 21 * * page 6, lines 14 - 24; figures 1-3 *<br>– – – | 1,2,4 | |
| A | DE-A-3 622 231  (R.BOSCH GMBH)<br>* column 4, lines 25 - 61; figures 1-4 *<br>– – – | 1,3,5,6,<br>10,15,19 | |
| A | US-A-4 742 259  (E.J.SCHAEFER & AL.)<br>* column 3, lines 20 - 25 * * column 4, lines 1 - 4; figures 4, 6 *<br>– – – | 1,4,10,11,<br>15,19 | |
| A | PATENT ABSTRACTS OF JAPAN vol. 7, no. 272<br>(E-214)(1417) 03 December 1983,<br>& JP-A-58 151855 (HITACHI SEISAKUSHO K.K.) 09 September 1983,<br>* the whole document *<br>– – – | 1,3,5,6,<br>10,15, | |
| A | US-A-4 742 258  (K.L.EARLE & AL.)<br>* column 7, line 27 - column 8, line 3; figures 17, 20 *<br>– – – – – | 1,3,5,6,<br>10,15,19 | TECHNICAL FIELDS<br>SEARCHED (Int. Cl.5)<br><br>H 02 K |

The present search report has been drawn up for all claims

| Place of search | Date of completion of search | Examiner |
|---|---|---|
| Berlin | 09 September 91 | LEOUFFRE M. |